Europäisches Patentamt

European Patent Office

Office européen des brevets

(11) Veröffentlichungsnummer: **0 371 165 B1**

## EUROPÄISCHE PATENTSCHRIFT

(45) Veröffentlichungstag der Patentschrift: **30.12.92**

(51) Int. Cl.⁵: **B21C 1/30**, F16H 25/12, F16H 53/06

(21) Anmeldenummer: **88119950.9**

(22) Anmeldetag: **30.11.88**

(54) **Bewegungsantrieb.**

(43) Veröffentlichungstag der Anmeldung:
**06.06.90 Patentblatt 90/23**

(45) Bekanntmachung des Hinweises auf die
Patenterteilung:
**30.12.92 Patentblatt 92/53**

(84) Benannte Vertragsstaaten:
**DE FR GB IT**

(56) Entgegenhaltungen:

| | |
|---|---|
| EP-A- 0 112 805 | DE-B- 1 028 067 |
| DE-B- 2 322 279 | FR-A- 550 841 |
| FR-A- 1 286 129 | GB-A- 2 194 610 |
| US-A- 1 339 276 | US-A- 3 374 684 |

(73) Patentinhaber: **Schumag Aktiengesellschaft
Nerscheider Weg 170
W-5100 Aachen(DE)**

(72) Erfinder: **Wüller, Günter
Hansemannstrasse 39
W-5100 Aachen(DE)**

(74) Vertreter: **Liermann, Manfred
Schillingsstrasse 335
W-5160 Düren(DE)**

Rank Xerox (UK) Business Services

EP 0 371 165 B1

## Beschreibung

Die Erfindung betrifft einen Bewegungsantrieb mit mindestens einer an einem umlaufend antreibbaren Kurventräger angeordneter geschlossener Kurve zur mechanischen Mitnahme von mittels der Kurve hin und her zu bewegenden Teilen, wobei diese mittels an Kurvenflächen anliegenden Mitnehmern, die vorzugsweise als Rollen oder Walzen ausgebildet sind, mit der Kurve zusammenwirken.

Ganz allgemein ist ein Bewegungsantrieb der oben beschriebenen Art bereits bekannt geworden durch das US-PS 1,339,276. Solche Antriebe haben sich bewährt und sind weitverbreitet im Einsatz. Sie werden auch angewendet bei sogen. Geradeausziehmaschinen zur Erzeugung der Schlittenbewegung der Ziehschlitten. In dieser Funktion sind sie bekannt geworden durch die DE-PS 10 28 067 und DE-PS 23 22 279. Insbesondere bei der Verwendung solcher Bewegungsantriebe zum Antrieb von Ziehschlitten an Geradeausziehmaschinen, also zum Antrieb von relativ massereichen Bauteilen, treten während des Ziehvorganges einerseits und infolge der hohen Schlittenbeschleunigung für einen raschen Rückhub des Ziehschlittens andererseits große Kräfte auf. Diese Kräfte müssen von den Mitnehmern, die in der Regel entsprechende Mitnehmerrollen, die an den Kurvenflächen anliegen, aufweisen, übertragen werden. Kurvenbreite und Rollenabstand müssen hierbei so sein, daß die Rollen immer an den zugeordneten Kurvenflächen anliegen, weil anderenfalls in den jeweiligen Kurvenumkehrpunkten unerlaubt große Stöße auftreten, die dadurch entstehen, daß infolge eines evtl. vorhandenen Spieles das anzutreibende Teil, also z.B. der Ziehschlitten, nicht mehr mitgenommen wird, bis die entsprechende Kurvenfläche erneut zur Anlage an die zugeordnete Rolle kommt. Durch diese Anlage aber entsteht ein Stoß, weil sich die Rolle nicht mit der entsprechenden Geschwindigkeit in die entsprechende Bewegungsrichtung des Schlittens bewegt. Um einen solchen Stoß zu verhindern könnte man die Rollen in ihrer Lage einstellbar gestalten, so daß sie so eingestellt werden können, daß sie beide an den zugeordneten Kurvenflächen anliegen. In dieser Anlage wird dann die Rolleneinstellung fixiert. Dies aber würde dazu zwingen, die zugeordneten Breitenabmessungen der Kurve an jedem Punkt der Kurve mit nahezu unendlicher Genauigkeit erzeugen zu müssen, weil beispielsweise bei nur geringem Übermaß der Breite an irgendeiner Stelle des Kurvenzuges die Rollenlagerung zerstört würde. Um dies zu vermeiden hat man im oben zitierten Stand der Technik eine Rolle starr angeordnet und die andere Rolle über einen abgefederten Schwenkarm gegen die zugeordnete Kurvenfläche gelegt. Maßungenauigkeiten des Kurvenzuges können nun von der gefederten Rolle aufgefangen werden. Hierbei ist die Rolle, die den Ziehhub des Ziehschlittens bewirkt, wegen der auftretenden notwendigen Ziehkräfte starr am Ziehschlitten gelagert, während die Schlittenrückhubrolle in der beschriebenen Weise gefedert gelagert ist. Da der Rückhub jedoch mit sehr großer Beschleunigung eingeleitet wird, muß auch die Rückhubrolle große Kräfte übertragen. Die der Rückhubrolle zugeordnete Feder muß also entsprechend stark sein. Dies hat die unerwünschte Folge, daß die Rollen immer mit entsprechend großen Kräften gegen die zugeordneten Kurvenflächen gepreßt werden, wodurch ein erhöhter Verschleiß sowohl an den Rollen und den zugeordenten Rollenlagern als auch an den Kurvenflächen entsteht. Wird die Feder zu weich eingestellt, kommt es in den Umkehrpunkten doch noch zu unzulässigen Schlägen und Stößen, weil die zu weich eingestellte Feder den auftretenden Beschleunigungskräften nicht stand hält und nachgibt. Dies führt zu raschen Zerstörungen an der Maschine. Solche Zerstörungen sind in der Praxis gefürchtet, weswegen in der Praxis auch die genannte Feder vorzugsweise zu hart eingestellt wird. Es kommt auch vor, daß diese Feder durch die Einstellung vollständig zu einem Block zusammengepreßt wird, so daß keinerlei Federmöglichkeit mehr existiert. In diesem Fall tritt ebenfalls eine rasche Zerstörung der Einrichtung aufgrund der unvermeidbaren Maßtoleranzen des Kurvenzuges ein.

Es ist aber auch der für die Abfederung der Rückhubrolle zu betreibende Baufaufwand unangenehm hoch.

Der Erfindung liegt damit die Aufgabe zugrunde, eine Einrichtung der eingangs beschriebenen Art vorzuschlagen, die weniger verschleißanfällig ist, geringe Anforderungen an die Fertigungsgenauigkeit der beschriebenen Kurve stellt, mit geringerem Bauaufwand erstellt und einfacher montiert werden kann.

Diese Aufgabe ist ausgehend von einem Bewegungsantrieb der eingangs beschriebenen Art dadurch gelöst, daß, mit Ausnahme eines kleinen Überdeckungsbereiches in der Umgebung der Kurvenumkehrpunkte, die der jeweiligen Bewegungsrichtung des zu bewegenden Teiles abgewandte Kurvenfläche mindestens soweit hinterschnitten ist, daß der zugeordnete und in seiner Lage fixierte Mitnehmer in diesem Bereich nicht an der Kurvenfläche anliegt und daß die Mitnehmer einem Ziehschlitten einer Geradeausziehmaschine zugeordnet sind, wobei der starr angeordnete Mitnehmer der ist, der während des Ziehhubes an der zugeordneten Kurvenfläche anliegt.

Durch die hinterschnittene Kurve steht immer nur der jeweils arbeitende Mitnehmer mit der Kurve in Arbeitskontakt. Der andere Mitnehmer ist jeweils frei. Die bisher vielfach notwendige und insbesondere bei Ziehschlitten von Geradeausziehmaschinen erforderliche große Anpreßkraft der Mitnehmer gegen die zugeordneten Kurvenflächen entfällt somit. Damit entfällt auch der entsprechende Verschleiß. Gleichzeitig aber werden auch nur noch sehr geringe Anforderungen an die Genauigkeit der Kurvenabmessungen gestellt. Ein Zwang mit entsprechend großen und zerstörend wirkenden Kräften an den Mitnehmern durch falsche Kurvendicken kann nicht mehr auftreten, weil über den wesentlichen Teil der Länge der Kurve jeweils immer nur ein Mitnehmer anliegt. Hierdurch wird es auch möglich, beide Mitnehmer starr bzw. in einer einmal eingestellten Position fixierbar zu gestalten. Ein abgefederter Schwingarm für einen Mitnehmer kann entfallen. Damit entfällt auch dessen Bauaufwand und die Gefahr der oben beschriebenen Fehleinstellung.

In einem sehr kleinen Überdeckungsbereich mündet dann auf der einen Seite der hinterschnittene Teil der Kurve in den normalen Kurvenverlauf des Arbeitsbereiches der Kurve, während auf der anderen Seite der Arbeitsbereich der Kurve in den hinterschnittenen Teil übergeht. In dem sehr kleinen Übergangsbereich liegen dann kurzfristig beide Mitnehmer gleichzeitig an der Kurvenfläche an, so daß das zu bewegende Teil, beispielsweise ein Ziehschlitten einer Geradeausziehmaschine, ruckfrei und stoßfrei gestoppt und in seiner Bewegungsrichtung umgekehrt werden kann.

Vorteilhafte Ausgestaltungen der Erfindung werden in den Unteransprüchen 2 bis 16 beschrieben. Hierbei ist insbesondere von Bedeutung, daß sich die Kurve nicht unbedingt als Steg zwischen den Mitnehmern oder den den Mitnehmern zugeordneten Rollen bewegen muß, sondern diese vielmehr auch als Nut oder Rille von außen umfassen kann.

Durch die besondere Ausbildung der Mitnehmer können diese sehr leicht so eingestellt und fixiert werden, daß sie während des ihnen zuzuordnenden Arbeitshubes immer richtig an der entsprechenden Kurvenfläche auch während des Überganges im Übergangsbereich anliegen, so daß kein Stöße auslösendes Spiel entsteht. Hierbei kann mindestens ein Mitnehmer auch so ausgebildet sein, daß er sich gegen eine starre Hydrauliksäule abstützt. Die Rohrleitung oder Schlauchleitung eines solchen starren Hydrauliksystems bewirkt trotz der grundsätzlichen Starrheit einer solchen Hydrauliksäule, doch eine gewisse Elastizität in sehr geringen Grenzen, wodurch auch Ungenauigkeiten des Kurvernverlaufs im kleinen Übergangsbereich aufgefangen werden können. Hierdurch ist es nicht mehr erforderlich den Übergangsbereich zu minimieren. Es kann hierdurch vielmehr ein größerer Übergangsbereich toleriert werden.

Die Erfindung soll nun anhand eines in den Zeichnungen dargestellten Ausführungsbeispiels näher beschrieben werden. Es zeigen:

Figur 1     Abwicklung einer Kurve auf dem ebenfalls abgewickelten Kurventräger,

Figur 2     Längsschnitt durch einen Mitnehmer,

Figur 3     Längsschnitt durch einen hydraulisch abgestützten Mitnehmer.

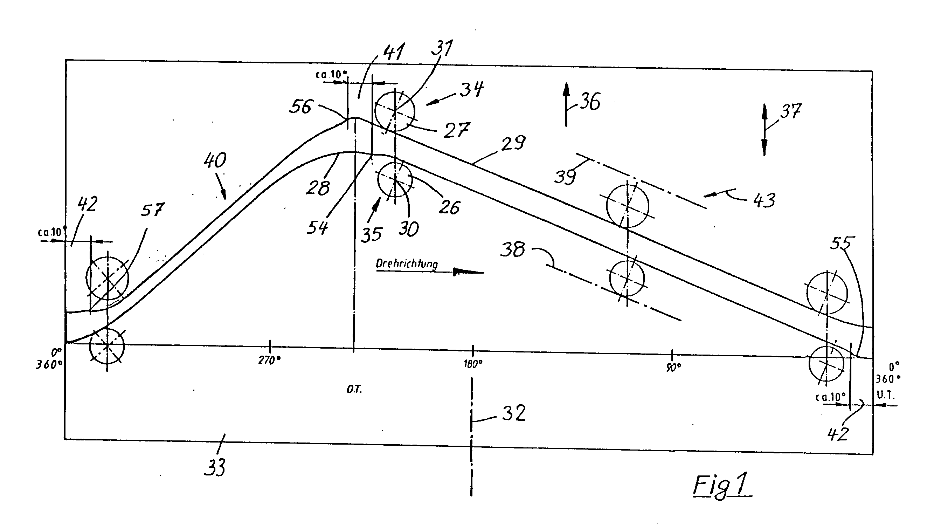

Als Bewegungsantrieb beispielsweise für einen Ziehschlitten einer Geradeausziehmaschine oder auch für die an solchen Maschinen typischerweise verwendeten beiden Ziehschlitten, die sich das Ziehgut gegenseitig übergeben, wird eine drehbar angeordnete Walze oder Trommel als Kurventräger verwendet, auf welcher, beispielsweise in erhabener Ausbildung, ein Kurvenzug angeordnet ist, wie er abgewickelt in Figur 1 dargestellt ist. Für jeden anzutreibenden Schlitten ist eine solche Kurve 40, angeordnet an einem Kurventräger 33, vorhanden. Eine solche Kurve weist, soweit sie erhaben ausgebildet ist, die Kurvenflächen 28 und gegenüberliegend 29 auf und soweit sie als Rille oder Nut ausgebildet ist (siehe Kurve 43 in Figur 1) die Kurvenflächen 38 und gegenüberliegend 39 auf. Zum Zusammenwirken mit beispielsweise der Kurve 40 sind an jedem zu bewegenden Teil 21, also beispielsweise an jedem Ziehschlitten, zwei Mitnehmer 34 und 35 angeordnet. Diese Mitnehmer 34 und 35 sind in sich gegenüberliegender Anordnung hintereinander in Bewegungsrichtung 37 des zu bewegenden Teils 21 angeordnet. Figur 1 zeigt diese Mitnehmer 34 und 35 in verschiedenen Lagen an der Kurve, die jeweils unterschiedlichen Drehwinkellagen der Kurven 40 oder 43 entsprechen. Betrachtet man den in Figur 1 eingetragenen Drehrichtungspfeil und unterstellt, daß sich der Kurventräger 33 in Richtung dieses Pfeils dreht, so erfolgt relativ zur Kurve 40 oder 43 eine Bewegung der Mitnehmer 34 und 35 von rechts nach links, also von 0° nach 360° wodurch eine Bewegung des zu bewegenden Teils 21 in Bewegungsrichtung 37 erzwungen wird. Diese Art der Bewegungserzeugung ist jedoch bekannt, so daß hierauf nicht näher eingegangen werden muß.

Damit die beschriebene Bewegung des zu bewegenden Teils 21, also beispielsweise eines Ziehschlittens einer Geradeausziehmaschine, beispielsweise von der Kurve 40 erzeugt werden kann, weisen die Mitnehmer 34 und 35 jeweils mindestens eine Rolle 26 und 27 auf, von denen im Ausführungsbeispiel die Rolle 27 die Rolle sein soll, mit der eine größere Kraft übertragen werden soll als mit der Rolle 26. Diese Situation tritt z.B. bei Ziehschlitten von Geradeausziehmaschinen für den Ziehhub auf. In diesem Fall überträgt die Rolle 26 die notwendige Kraft für den Schlittenrückhub. In einem solchen Fall ist die Rolle 27 vorzugsweise starr am zu bewegenden Teil 21 drehbar gelagert.

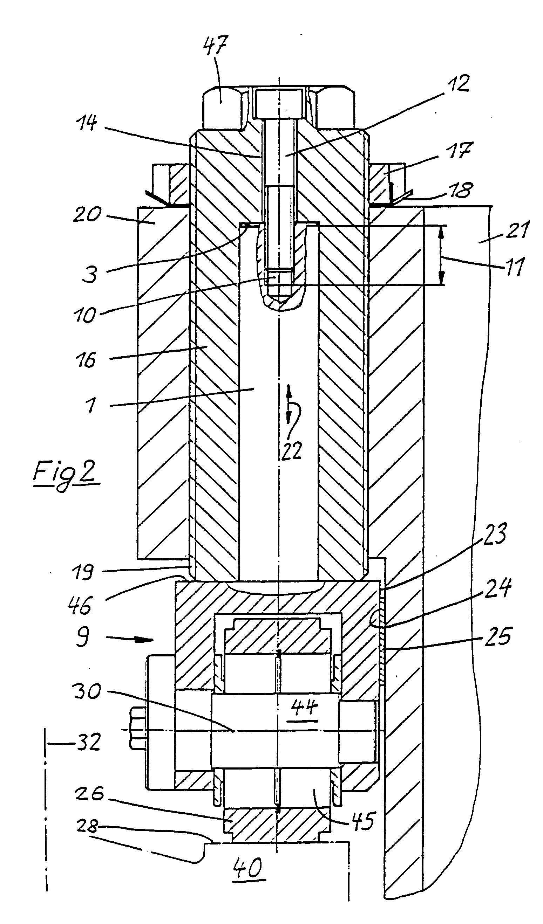

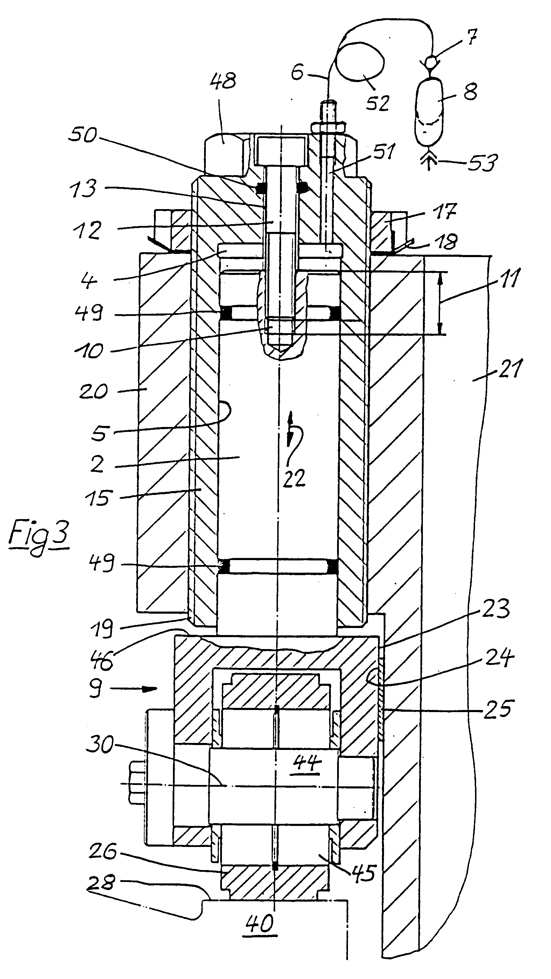

Die Rolle 26 kann etwas schwächer und kleiner ausgeführt sein und ist in Bewegungsrichtung 37 verstellbar ausgeführt. Hierzu ist die Rolle 26 in einem gabelartigen Rollenkopf 9 auf einem Rollenbolzen 44 um die Drehachse 30 drehbar gelagert. Hierzu können geeignete Wälzlager 45 verwendet werden, die in den Figuren 2 und 3 nur angedeutet sind.

Die Drehachse 30 des Rollenkopfes 9 ist senkrecht zur Drehachse 32 des Kurventrägers 33 angeordnet. Der Rollenkopf 9 weist auf seiner dem zu bewegenden Teil 21 zugewandten Seite eine flache Fläche 23 auf, die an einer ebenfalls flachen Gegenfläche 24 anliegt. Die Gegenfläche 24 ist an einem Teil 25 ausgebildet, welches am zu bewegenden Teil 21 angeordnet ist. Die Gegenfläche 24 kann natürlich auch unmittelbar am zu bewegenden Teil 21 ausgebildet sein. Durch die mit der Gegenfläche 24 zusammenarbeitende flache Fläche 23 wird der Rollenkopf 9 gegen Verdrehung gesichert. Eine Verschiebung des Rollenkopfes 9 in Verstellrichtung 22 und damit auch in Bewegungsrichtung 37 bleibt jedoch möglich. Hierzu ist der Rollenkopf 9 im Ausführungsbeispiel nach Figur 2 über einen Schaft 1, mit dem er fest verbunden ist, in einer entsprechenden Bohrung 3 eines Einstellstückes 16 eingesetzt. An seiner dem Rollenkopf 9 abgewandten Stirnseite weist der Schaft 1 zentrisch angeordnet ein sich über die Länge 11 erstreckendes Innengewinde 10 auf, in welches eine Kopfschraube 12 eingesetzt ist, die durch eine entsprechende Bohrung 14 im Einstellstück 16 hindurchgeführt ist. Mittels dieser Kopfschraube 12 kann der Schaft 1 nun so weit in die Bohrung 3 hineingezogen werden, daß der Rollenkopf mit seiner Rückseite 46 an der entsprechenden nicht näher bezeichneten Stirnseite des Einstellstücks 16 anliegt.

Das Einstellstück 16 weist auf seiner Außenseite ein Außengewinde 19 auf, mit welchem es in eine entsprechende Gewindemutter 20 eingesetzt ist. Im Ausführungsbeispiel ist die Gewindemutter 20 einstückig am zu bewegenden Teil 21 ausgebildet. Diese einstückige Ausbildung ist jedoch keineswegs zwingend.

Solange die Kopfschraube 12 nicht allzu fest angezogen ist, kann das Einstellstück 16 im Innengewinde der Gewindemutter 20 gedreht und damit in Verstellrichtung 22 bewegt werden. Hierzu weist das Einstellstück 16 an seiner freien Stirnseite einen üblichen Außensechskant 47 auf. Es kann nun zur Einstellung die Kurve 40 durch entsprechende Verdrehung des Kurventrägers 33 so gefahren werden, daß die Rollen 26 und 27 beispielsweise in einem Überdeckungsbereich 41 stehen. Es wird nun durch Verdrehung des Einstellstückes 16 der Rollenkopf so lange in Verstellrichtung 22 gefahren, bis die Rolle 9 an der Kurvenfläche 28 sicher anliegt. Liegt in dieser Situation die Rolle 27 noch nicht sicher an der zugeordneten Kurvenfläche 29 an, so wird die beschriebene Einstellung fortgesetzt und durch die weitere Verstellung der Schlitten oder das zu bewegende Teil 21 verschoben, so daß die Rolle 27 an der Kurvenfläche 29 anliegt, ebenso wie die Rolle 26. Damit ist schon die richtige Einstellung erreicht und kann gesichert werden. Hierzu weist auf der freien überstehenden Rückseite das Einstellstück 16 eine übliche Nutmutter 17 auf, die in ebenfalls üblicher Weise mit einem der Nutmutter 17 zugeordneten Sicherungsblech 18 nach dem Festziehen der Nutmutter 17 gesichert werden kann. Die Nutmutter 17 wirkt hier in üblicher Weise als Kontermutter, wodurch die eingestellte Position der Rolle 26 und damit auch der Rolle 27 gesichert ist. Hierdurch nehmen nun die beiden Rollen 26 und 27 eine starr fixierte, unveränderliche Position zueinander ein. Dies ist jedoch wegen der besonderen Ausgestaltung der Kurvenflächen der Kurven 40 bzw. 43, wie noch am Beispiel der Kurve 40 beschrieben wird, unschädlich. Dennoch aber kann eine wenn auch geringfüge Elastizität erwünscht sein. Dies ist erreichbar mit einem Aufbau des Mitnehmers 35 nach dem in Figur 3 dargestellten Ausführungsbeispiel. Auch hier liegt wieder ein Rollenkopf 9, vor der in seinem Aufbau und in der Gestaltung seiner Verdrehsicherung dem zu Figur 2 beschriebenen Rollenkopf 9 entspricht. Der Schaft 2 des Rollenkopfes 9 nach Figur 3 ist jedoch als Hydraulikkolben ausgebildet und hierzu in die als entsprechender Zylinder ausgebildete Bohrung 4 des Einstellstückes 15 eingesetzt, das im wesentlichen so aufgebaut ist wie das Einstellstück 16, das zu Figur 2 bereits beschrieben wurde. Der als Hydraulikkolben ausgebildete Schaft 2 ist hierbei über Dichtungen 49 gegen die Wand 5 abgedichtet.

Der Schaft 2 weist ebenfalls an seiner dem Rollenkopf 9 abgewandten Stirnseite ein sich über die Länge 11 erstreckendes Innengewinde 10 auf, in welches in der bereits zu Figur 2 beschriebenen Anordnung eine Kopfschraube 12 durch eine entsprechende Bohrung 13 im Einstellstück 15 eingesetzt ist. Allerdings ist der gewindelose Schaft der Kopfschraube 12 über die Dichtung 50 gegen die Bohrungswandung der Bohrung 13 abgedichtet. Mit der Kopfschraube 12 ist der Schaft 2 nicht so weit in die Bohrung 4 hineingezogen, daß die Rückseite 46 des Rollenkopfs 9 an der entsprechenden stirnseitigen Gegenfläche des Einstellstückes 15 anliegt. Hier verbleibt vielmehr ein kleiner Spalt. Ein etwas größerer Abstand verbleibt in der Bohrung 4 zwischen der dem Rollenkopf 9 abgewandten Stirnseite des Schaftes 2 und dem ebenfalls nicht näher bezeichneten Zylinderende der Bohrung 4, so daß für den als Hydraulikkolben ausgebildeten Schaft 2 eine kleine Bewegungsmöglichkeit in Verstellrichtung 22 verbleibt.

Der vor der dem Rollenkopf 9 abgewandten Stirnseite des Schaftes 2 verbleibende freie Raum der Bohrung 4 ist mit Hydraulikflüssigkeit vollständig gefüllt. Hierzu weist die entsprechende Kopfseite des Einstellstückes 15 eine geeignete Anschlußbohrung 51 für eine Hydraulikleitung 6 auf. Die Hydraulikleitung weist ihrerseits ein Rückschlagventil 7 auf, welches vor einem von außen nachfüllbaren Druckspeicher 8 angeordnet ist und eine Rückbefüllung des Druckspeichers 8 aus dem freien Zylinderraum der Bohrung 4 heraus verhindert. Ein Befüllen dieses freien Zylinderraumes der Bohrung 4 aus dem Druckspeicher 8 heraus ist jedoch möglich, so daß das Hydraulikmedium in dem genannten freien Zylinderraum stets unter einem von dem Druckspeicher 8 erzeugten Druck steht und damit den Schaft 2 soweit ausfährt, wie dies die Kopfschraube 12 zuläßt.

Treten nun von außen Kräfte auf, die den Schaft 2 in die Bohrung 4 hineintreiben wollen, so wird dies von der genannten Hydraulikflüssigkeit sofort verhindert. Ein Ausweichen der Hydraulikflüssigkeit zurück in den Druckspeicher 8 wird vom Rückschlagventil 7 verhindert. Hierdurch werden die notwendigen Kräfte auf das zu bewegende Teil 21 übertragen. Die Einstellung der Rolle 26 erfolgt so, wie bereits zum Ausführungsbeispiel nach Figur 2 beschrieben. Mit dem Ausführungsbeispiel nach Figur 3 können jedoch kurze Kraftstöße, die z.B. von Ungenauigkeiten der Abmessungen der Kurve 40 herrühren, aufgefangen werden. Unter kurzfristigen Kraftstößen kann nämlich der beschriebene hydraulische Aufbau geringfügig nachgeben. Um ein solches Nachgeben zu ermöglichen, wird ganz einfach die immer vorhandene Elastizität der Leitung 6 ausgeschöpft. Die Elastizität der Leitung 6 kann dadurch beeinflußt werden, daß man einen mehr oder weniger elastischen Schlauch als Hydraulikleitung verwendet oder aber dadurch, daß man zwar die üblichen sehr festen Metallrohre als Hydraulikleitung verwendet, diese jedoch in Form mindestens einer Windung 52 verlegt, wodurch ebenfalls eine geringe Nachgiebigkeit der Säule der Hydraulikflüssigkeit erreicht wird. Leitung 6, Rückschlagventil 7 und Druckspeicher 8 weisen insgesamt geringe Abmessungen auf und sind am zu bewegenden Teil 21 befestigt und bewegen sich mit diesem mit. Ein Füllanschluß 53 am Druckspeicher 8 ermöglicht ein bedarfsweises Nachfüllen dieses Druckspeichers 8. Die Verstellung des Einstellstückes 15 durch Verdrehung dieses Stückes kann wiederum über den Außensechskant 48 erfolgen. Nutmutter 17 und Sicherungsblech 18 sorgen in der bereits beschriebenen Weise für die Sicherung der eingestellten Position.

Aus Figur 1 ist zu ersehen, daß die Rollen 26 und 27 in Bewegungsrichtung 37 hintereinander angeordnet sind und hierbei zueinander parallel verlaufende und senkrecht zur Drehachse 32 des Kurventrägers 33 verlaufende Drehachsen 30 und 31 aufweisen. Zwischen den nicht näher bezeichneten Umfangsflächen der Rollen 26 und 27 verläuft die Kurve 40, die im Stand der Technik so bemessen ist, daß sie während des gesamten Kurvenverlaufes ständig mit ihren Kurvenflächen 28 und 29 an den Umfangsflächen der Rollen 26 und 27 anliegt und diese niemals verläßt. Hierdurch aber entstehen die eingangs bereits beschriebenen Nachteile, die man im Stand der Technik dadurch zu beheben versucht hat, daß man im Falle der Anwendung solcher Kurven an Ziehschlitten von Geradeausziehmaschinen die Rolle für den Rückhub des Ziehschlittens -dies ist in der Figur 4 die Rolle 26- in einem abgefederten Hebelarm gelagert hat. Die hierdurch neu entstandenen Nachteile sind eingangs ebenfalls bereits beschrieben. Der Arbeitsrythmus einer solchen Kurve 40 an sich erzwingt jedoch nicht die ständige Anlage der Kurvenflächen 28 und 29 an den Umfangsflächen der Rollen 26 und 27. Während des Arbeitsprozesses ist vielmehr immer nur die eine Rolle oder die andere Rolle notwendig um die gewünschten Kräfte zu übertragen. So ist z.B. in Figur 1 zu erkennen, daß bei einer Durchführung des Ziehhubes 36 lediglich die Rolle 27 arbeitet und daher an der Kurvenfläche 29 anliegen muß (bei der Gestaltung der Kurve als Nut liegt in diesem Fall die Kurvenfläche 38 an der Rolle 26 an). Während des Ziehhubes 36 hat die Rolle 26 keinerlei Kräfte zu übertragen. Die Kurvenfläche 28 weist daher in dem der Kurvenfläche 29 für den Ziehhub 36 gegenüberliegenden Bereich zwischen den Punkten 54 und 55 eine Hinterschneidung auf. Dies bedeutet, daß in diesem Bereich der Kurve 40 die entsprechende Kurvenfläche gegenüber dem Normalverlauf der Kurvenfläche 28, bei dem diese an der Rolle 26 immer anliegen würde, zurückversetzt ist, so daß die in ihrer Lage in der eben beschriebenen Weise eingestellte und fixierte Rolle 26 frei ist und die Kurvenfläche 28 nicht berührt. Da die Rolle 26 nun nicht mehr über Federkraft gegen die Kurvenfläche 28 angelegt ist, wird sie auch nicht nachgeführt sondern bleibt frei.

Während des Rückhubs, der in zum Ziehhub 36 entgegengesetzter Richtung erfolgt, wird nur die Rolle 26 zur Kraftübertragung benötigt. Die Rolle 27 hat während des Rückhubes keinerlei Kraft zu übertragen die zur Durchführung des Rückhubes notwendig wäre. In diesem Bereich muß vielmehr die Rolle 26 an der Kurvenfläche 28 anliegen. Entsprechend ist in diesem Bereich der Teil der Kurve 40, der zwischen den Punkte 56 und 57 liegt, hinterschnitten und liegt daher hinter dem Normalverlauf der Kurvenfläche 29 zurück, so daß in diesem Bereich die Rolle 27 nicht an der entsprechenden Kurvenfläche anliegt, wie dies auch in Figur 1 auf der linken Seite angedeutet ist.

Außer den beschriebenen hinterschnittenen Bereichen und den normal verlaufenden Bereichen der Kurvenfläche 28 und 29 weist die Kurve 40 noch zwei Überdeckungsbereiche 41 und 42 auf, in denen die Umfangsflächen der Rollen 26 und 27 beide gleichzeitig an den Kurvenflächen 28 bzw. 29 anliegen. In diesen Überdeckungsbereichen erfolgt die jeweilige Lastumkehr vom Ziehhub in den Rückhub oder vom Rückhub in den Ziehhub. So ist zu erkennen, daß im mit O.T. bezeichneten oberen Umkehrbereich der Kurve 40 ein Überdeckungsbereich 41 von ca. 10° vorgesehen ist. Im mit U.T. bezeichneten unteren Umkehrbereich, in dem ein Wechsel vom Rückhub in den Ziehhub erfolgt, ist ein Überdeckungsbereich von ca. 20° vorgesehen, der jedoch auch 10° sein könnte. Auch ein Überdeckungsbereich von 10° ist keineswegs zwingend erforderlich sondern lediglich günstig.

In Figur 1 sind die in der Nähe des mit O.T. bezeichneten oberen Umkehrpunktes dargestellten Rollen 26 und 27 bei Beachtung der zu Figur 1 angegebenen Drehrichtung der Kurve 40 so angeordnet, daß über die Rolle 27 der Ziehhub durchgeführt wird, so daß die Rolle 27 mit ihrer Umfangsfläche an der Kurvenbahn 29 anliegt und von dieser in Richtung des Ziehhubs 36 gedrängt wird. Die Rolle 26 hingegen ist frei. Beide Rollen nähern sich bei weiterer Drehung der Kurve 40 in der in Figur 1 angegebenen Drehrichtung dem Überdeckungsbereich 41, in dem die Rolle 26 im Punkt 54 mit ihrer Umfangsfläche den hinterschnittenen Bereich verlassen hat und voll an der Kurvenfläche 28 anliegt, während gleichzeitig die Umfangsfläche der Rolle 27 noch vollständig an der Kurvenfläche 29 anliegt. Beide Rollen 26 und 27 liegen damit fest an den zugeordneten Kurvenflächen 28 und 29 an, so daß das zu bewegende Teil 21 keinerlei vom Kurvenverlauf der Kurve 40 unabhängige Bewegungsmöglichkeit in Bewegungsrichtung 37 hat. Das zu bewegende Teil 21 wird vom Verlauf der Kurve 40 streng geführt. Dieser Überdeckungsbereich 41 kann jedoch sehr klein sein, z.B. 10° oder kleiner. Es ist lediglich erforderlich, daß der Ziehhub 36 vollständig ausgeführt wird und unmittelbar vor dem Ende des Ziehhubes 36 der Kontakt der Rolle 26 mit der Kurvenfläche 28 zur Einleitung des Rückhubes hergestellt wird. Sobald der Ziehhub 36 vollständig beendet und der sichere Kontakt der Rolle 26 mit der Kurvenfläche 28 hergestellt ist, ist eine Anlage der Umfangsfläche der Rolle 27 an der Kurvenfläche 29 nicht mehr erforderlich. Die Rolle 27 erreicht damit den Punkt 56 und tritt dort in den hinterschnittenen Bereich der Kurvenfläche 29 der Kurve 40 ein und verliert damit den Kontakt zur Kurvenfläche 29.

Der umgekehrte Ablauf wird durchlaufen im Überdeckungsbereich 42 in der Nähe des mit U.T. bezeichneten unteren Umkehrpunktes der Kurve 40, in dem vom Rückhub auf den Ziehhub gewechselt wird. Dort erhält die Umfangsfläche der Rolle 27 bereits wieder im Punkt 57 Kontakt mit der Kurvenfläche 29, während nach Einleitung des Ziehhubes die Umfangsfläche der Rolle 26 ihren Kontakt mit der Kurvenfläche 28 erst im Punkt 55 verliert. Es liegt dort ein Überdeckungsbereich 42 von ca. 20° vor, der jedoch durchaus erheblich kleiner gehalten werden kann.

Eine genaue Einhaltung der notwendigen Breitenabmessungen der Kurve 40 ist nunmehr nur noch in den Überdeckungsbereichen 41 und 42 notwendig soweit nicht die hydraulisch abgestützte Rolle angewendet wird. Diese Überdeckungsbereiche können minimiert werden. Hierdurch wird die Herstellung des Kurvenzuges der Kurve 40 oder auch 43 erheblich vereinfacht. Gleichzeitig wird die konstruktive Ausbildung der zugehörigen Mitnehmer erheblich vereinfacht und es werden sowohl Mitnehmer als auch Kurvenzug der Kurve 40 oder 43 hierdurch weniger belastet und weniger verschleißanfällig. Stöße in den Umkehrzonen können vermindert werden und Zerstörungen durch fehlerhafte Einstellungen werden vermieden. Hierdurch können als Folgeerscheinung höhere Ziehgeschwindigkeiten und ein ruhigerer Lauf von Ziehschlitten erreicht werden oder entsprechende Eigenschaften bei anderen Bauteilen als Ziehschlitten, die über eine solche Kurve angetrieben werden.

Die hohe Federkraft die Rückhubrolle -im Ausführungsbeispiel nach Figur 1 ist dies die Rolle 26- belastenden Feder, die im Stand der Technik erforderlich war, erzeugte als Reaktionskräfte hohe Querkräfte auf die den zu bewegenden Teilen zuzuordnenden Führungen und damit dort einen entsprechend hohen Verschleiß. Auch diese nachteiligen Kräfte werden mit der erfindungsgemäßen Konstruktion deutlich reduziert, womit auch der zugehörige Verschleiß der genannten Führungen deutlich reduziert wird.

Liste der verwendeten Bezugszeichen

| 1 | Schaft |
|---|---|
| 2 | Schaft |
| 3 | Bohrung |
| 4 | Bohrung |
| 5 | Wand |
| 6 | Leitung |
| 7 | Rückschlagventil |
| 8 | Druckspeicher |
| 9 | Rollenkopf |
| 10 | Innengewinde |
| 11 | Länge |
| 12 | Kopfschraube |

13 Bohrung

14 Bohrung

15 Einstellstück

16 Einstellstück

17 Nutmutter

18 Sicherungsblech

19 Außengewinde

20 Gewindemutter

21 zu bewegendes Teil

22 Verstellrichtung

23 flache Fläche

24 Gegenfläche

25 Teil

26 Rolle

27 Rolle

28 Kurvenfläche

29 Kurvenfläche

30 Drehachse

31 Drehachse

32 Drehachse (Kurventräger)

33 Kurventräger

34 Mitnehmer

35 Mitnehmer

36 Ziehhub

37 Bewegungsrichtung

38 Kurvenfläche

39 Kurvenfläche

40 Kurve

41 Überdeckungsbereich

42 Überdeckungsbereich

43 Kurve

44 Rollenbolzen

45 Wälzlager

46 Rückseite

47 Außensechskant

48 Außensechskant

49 Dichtung

51 Anschlußbohrung

52 Windung

53 Füllanschluß

54 Punkt

55 Punkt

56 Punkt

57 Punkt

**Patentansprüche**

1. Bewegungsantrieb mit mindestens einer an einem umlaufend antreibbaren Kurventräger (33) angeordneten geschlossenen Kurve (40,43) zur mechanischen Mitnahme von mittels der Kurve (40,43) hin und her zu bewegenden Teilen (21), wobei diese mittels an Kurvenflächen (28, 29; 38,39) anliegenden Mitnehmern (34, 35), die vorzugsweise Rollen (26,27) oder Walzen, die mit der Kurve (40,43) zusammenwirken, aufweisen, mitgenommen werden, dadurch gekennzeichnet, daß, mit Ausnahme eines kleinen Überdeckungsbereiches (41,42) in der Umgebung der Kurvenumkehrpunkte (O.T.; U.T.), die der jeweiligen Bewegungsrichtung (37) des zu bewegenden Teiles (21) abgewandte Kurvenfläche mindestens so weit hinterschnitten ist, daß der zugeordnete und in seiner Lage fixierte Mitnehmer (34, 35) in diesem Bereich nicht an der Kurvenfläche anliegt und daß die Mitnehmer (34,35) einem Ziehschlitten einer Geradeausziehmaschine zugeordnet sind, wobei der starr angeordnete Mitnehmer (34,35) der ist, der während des Ziehhubes (36) an der zugeordneten Kurvenfläche (29,38) anliegt.

2. Einrichtung nach Anspruch 1, dadurch gekennzeichnet, daß im Überdeckungsbereich (41,42) beide Kurvenflächen (28,29; 38,39) je am zugeordneten Mitnehmer (34,35) anliegen.

3. Einrichtung nach Anspruch 2, dadurch gekennzeichnet, daß der Überdeckungsbereich (41,42) ca. 10° beträgt.

4. Einrichtung nach einem der Ansprüche 1 und 2, dadurch gekennzeichnet, daß die beiden Überdeckungsbereiche (41,42) einer Kurve (40,43) unterschiedlich groß sind.

5. Einrichtung nach einem der Ansprüche 1 bis 4, dadurch gekennzeichnet, daß in Bewegungsrichtung (37) des zu bewegenden Teils (21) zwei Mitnehmer (34,35) hintereinander an diesem Teil angeordnet sind, zwischen denen sich die Kurvenflächen (28,29) befinden.

6. Einrichtung nach einem der Ansprüche 1 bis 4, dadurch gekennzeichnet, daß in Bewegungsrichtung (37) des zu bewegenden Teiles (21) zwei Mitnehmer (34,35) hintereinander an diesem Teil angeordnet sind, die sich zwischen den Kurvenflächen (38,39) befinden.

7. Einrichtung nach einem der Ansprüche 1 bis 6, dadurch gekennzeichnet, daß ein Mitnehmer (35) in seiner Lage verstellbar und feststellbar angeordnet ist, während der andere (34) starr angeordnet ist.

8. Einrichtung nach einem der Ansprüche 1 bis 7, dadurch gekennzeichnet, daß beide Mitnehmer (34,35) eine Rolle (26,27) zur Anlage an einer zugeordneten Kurvenfläche (28,29; 38,39) aufweisen, die in einem Rollenkopf (9) angeordnet ist und deren Drehachse (30,31) senkrecht zur Drehachse (32) des Kurventrägers (33) verläuft.

9. Einrichtung nach einem der Ansprüche 1 bis 8, dadurch gekennzeichnet, daß der in seiner Lage verstellbar angeordnete Rollenkopf (9) einen Schaft (1,2) aufweist, der in eine entsprechende Bohrung (3,4) eines Einstellstückes (15,16) einsetzbar oder eingesetzt und dort befestigbar oder befestigt ist, wobei das Einstellstück (15,16) an einem zu bewegenden Teil (21), vorzugsweise an einem Ziehschlitten, befestigbar oder befestigt ist.

10. Einrichtung nach Anspruch 9, dadurch gekennzeichnet, daß der Rollenkopf (9) am zu bewegenden Teil (21) gegen Verdrehung gesichert ist.

11. Einrichtung nach Anspruch 10, dadurch gekennzeichnet, daß der Rollenkopf (9) mit einer parallel zur Verstellrichtung (22) verlaufenden flachen Fläche (23) an einer entsprechenden Gegenfläche (24) des zu bewegenden Teils (21) oder eines daran angeordneten Teiles (25) gleitfähig anliegt.

12. Einrichtung nach einem der Ansprüche 1 bis 11, dadurch gekennzeichnet, daß das Einstellstück (15,16) als Gewindebolzen mit Außengewinde (19) ausgebildet und in eine Gewindemutter (20) eingesetzt oder einsetzbar ist, die ihrerseits am zu bewegenden Teil (21) angeordnet ist, wobei das Einstellstück (15,16) in einer eingestellten Lage gegen Verstellung gesichert ist.

13. Einrichtung nach Anspruch 12, dadurch gekennzeichnet, daß als Sicherung gegen Verstellung eine Nutmutter (17) mit einem Sicherungsblech (18) als Kontermutter auf das Außengewinde (19) aufgesetzt ist.

14. Einrichtung nach einem der Ansprüche 1 bis 13, dadurch gekennzeichnet, daß der Schaft (1,2) zylindrisch ausgebildet ist und an seiner dem Rollenkopf (9) abgewandten Stirnseite ein sich zentrisch und axial in begrenzter Länge (11) erstreckendes Innengewinde (10) aufweist, in welches eine Kopfschraube (12) durch eine entsprechende Bohrung (13,14) des Einstellstückes (15,16) hindurch eingesetzt ist.

15. Einrichtung nach einem der Ansprüche 1 bis 14, dadurch gekennzeichnet, daß der Schaft (2) als gegen die Wand (5) der Bohrung (4) abgedichteter Kolben ausgebildet ist, wobei der vor dem Kolben befindliche freie Zylinderraum über eine Leitung (6) mit einem Druckspeicher (8) verbunden ist und wobei die Leitung (6) ein Rückschlagventil (7) aufweist, das eine Rückströmung in den Druckspeicher (8) verhindert.

## Claims

1. Motion drive comprising at least one closed curve (40, 43) arranged on a circulating drivable curve support (33) for the mechanical entrainment of parts (21) to be moved back and forth by means of the curve (40, 43), wherein these parts are entrained by means of entrainers (34, 35) in contact with surfaces (28, 29; 38, 39) of the curve, the entrainers comprising preferably rollers (26, 27) or drums which cooperate with the curve (40, 43), characterised in that, with the exception of a small overlap region (41, 42) adjacent to the points of curve reversal (O.T.;U.T.), the curve surface facing away from the particular direction of movement (37) of the part (21) to be moved is undercut at least sufficiently for the associated fixed-position entrainer (34, 35) not to be in contact with the curve surface in this region, and that the entrainers (34, 35) have associated therewith draw carriages of a rectilinear extraction machine, wherein the fixed entrainer (34, 35) is that which is in contact with the associated curve surface (29, 38) during the extraction stroke (36).

2. Apparatus according to claim 1, characterised in that in the overlap regions (41, 42) both curve surfaces (28, 29; 38, 39) each are in contact with the associated entrainer (34, 35).

3. Apparatus according to claim 2, characterised in that the overlap region (41, 42) is about 10°.

4. Apparatus according to one of claims 1 and 2, characterised in that the two overlap regions (41, 42) of a curve (40, 43) are of different sizes.

5. Apparatus according to one of claims 1 to 4, characterised in that in the direction of movement (37) of the part (21) to be moved two entrainers (34, 35) are arranged one behind the other on this part and between which the curve surfaces (28, 29) are located.

6. Apparatus according to one of claims 1 to 4, characterised in that in the direction of movement (37) of the part (21) to be moved two entrainers (34, 35) are arranged one behind the other on this part and are located between the curve surfaces (38, 39).

7. Apparatus according to one of claims 1 to 6, characterised in that one entrainer (35) is arranged to be adjustable and securable as to its position while the other entrainer (34) is arranged to be fixed.

8. Apparatus according to one of claims 1 to 7, characterised in that both entrainers (34, 35) comprise a roller (26, 27) for the contact with an associated curve surface (28, 29; 38, 39), said rollers being arranged on a roller head (9) and their axes of rotation (30, 31) extending perpendicular to the axis of rotation (32) of the curve support (33).

9. Apparatus according to one of claims 1 to 8, characterised in that the roller head (9) which is adjustable as to its position comprises a shaft (1,2) which can be inserted or is inserted in a corresponding bore (3,4) of a setting member (15, 16) and there can be secured or is secured, wherein the setting member (15, 16) can be fixed to or is fixed to a part (21) to be moved, preferably to a draw carriage.

10. Apparatus according to claim 9, characterised in that the roller head (9) is secured against rotation relative to the part (21) to be moved.

11. Apparatus according to claim 10, characterised in that the roller head (9) has a flat surface (23) extending parallel to the displacement direction (22) in sliding contact with a corresponding counter surface (24) of the part (21) to be moved or of a part (25) arranged thereon.

12. Apparatus according to one of claims 1 to 11, characterised in that the setting member (15, 16) is formed as a threaded bolt with an external thread (19) and is set in or can be set in a threaded nut (20) which for its part is arranged on the part (21) to be moved, wherein the setting member (15, 16) is secured in a set position against displacement.

13. Apparatus according to claim 12, characterised in that a nut (17) having a securing plate (18) as a lock nut is set on the external thread (19) as a means to prevent displacement.

14. Apparatus according to one of claims 1 to 13, characterised in that the shaft (1, 2) is cylindrical and at its end remote from the roller head (9) has an internal thread (10) which extends centrally and axially over a limited length (11), into which internal thread is screwed a set screw (12) through a corresponding bore (13, 14) in the setting member (15, 16).

15. Apparatus according to one of claims 1 to 14, characterised in that the shaft (2) is formed as a piston sealed relative to the wall (5) of the bore (4), wherein the free cylinder space located in front of the piston is connected to a pressure reservoir (8) by means of a conduit (6), and wherein the conduit (6) includes a non-return valve (7) which prevents a reverse flow into the pressure reservoir (8).

**Revendications**

1. Commande de mouvement comportant au moins une came sans fin (40, 43) placée sur un support de came (33) pouvant être entraîné en rotation, pour l'entraînement mécanique d'éléments à déplacer (21) au moyen de la came (40, 43) selon un mouvement de va-et-vient, ces éléments étant entraînés au moyen d'entraîneurs (34, 35) portant sur les surfaces de came (28, 29 ; 38, 39) et présentant de préférence des galets (26, 27) ou des rouleaux qui coopèrent avec la came (40, 43), caractérisée en ce que, à l'exception d'une petite zone de recouvrement (41, 42) au voisinage des points d'inversion de la came (point mort supérieur ; point mort inférieur), la surface de came opposée au sens de mouvement (37) correspondant de l'élément (21) à déplacer est contre-dépouillée au moins suffisamment amplement pour que l'entraîneur (34, 35) associé et fixé dans sa position ne porte pas sur la surface de came dans cette zone, et en ce que les entraîneurs (34, 35) sont associés à un chariot de traction d'une machine de traction rectiligne, l'entraîneur (34, 35) placé fixe étant celui qui porte pendant la course de traction (36) sur la surface de came (29, 38) associée .

2. Dispositif selon la revendication 1, caractérisé en ce que, dans la zone de recouvrement (41, 42) les deux surfaces de came (28, 29 ; 38, 39) portent chacune sur l'entraîneur (34, 35) associé.

3. Dispositif selon la revendication 2, caractérisé en ce que la zone de recouvrement (41, 42) représente environ 10°.

4. Dispositif selon l'une quelconque des revendications 1 et 2, caractérisé en ce que les deux zones de recouvrement (41, 42) d'une came (40, 43) sont de dimensions différentes.

5. Dispositif selon l'une quelconque des revendications 1 à 4, caractérisé en ce que dans le sens du mouvement (37) de l'élément à déplacer (21) deux entraîneurs (34, 35) sont disposés l'un derrière l'autre contre cet élément, entraîneurs entre lesquels se trouvent les surfaces de came (28, 29).

6. Dispositif selon l'un quelconque des revendications 1 à 4, caractérisé en ce que, dans le sens du mouvement (37) de l'élément à déplacer (21), deux entraîneurs (34, 35) sont disposés l'un derrière l'autre contre cet élément, et se trouvent entre les surfaces de came (38, 39).

7. Dispositif selon l'une quelconque des revendications 1 à 6, caractérisé en ce qu'un entraîneur (35) est disposé réglable et blocable dans sa position tandis que l'autre (34) est disposé fixe.

8. Dispositif selon l'une quelconque des revendications 1 à 7, caractérisé en ce que les deux entraîneurs (34, 35) présentent un galet (26, 27) pour prendre appui sur une surface de came (28, 29 ; 38, 39) associée, ce galet étant disposé dans une tête à galet (9) et son axe de rotation (30, 31) s'étendant perpendiculairement à l'axe de rotation (32) du support de came (33).

9. Dispositif selon l'une quelconque des revendications 1 à 8, caractérisé en ce que la tête à galet (9) disposée réglable dans sa position présente une tige (1, 2) qui peut être introduite ou est introduite dans un alésage correspondant (3, 4) d'une pièce de réglage (15, 16) et qui peut y être fixée ou y est fixée, la pièce de réglage (15, 16) pouvant être fixée ou étant fixée à un élément (21) à déplacer, de préférence à un chariot de traction.

10. Dispositif selon la revendication 9, caractérisé en ce que la tête à galet (9) est prémunie sur la pièce (21) à déplacer contre toute torsion.

11. Dispositif selon la revendication 10, caractérisé en ce que la tête à galet (9) prend appui par une surface plane (23), s'étendant parallèlement à la direction de déplacement (22), sur une contre-surface (24) correspondante de l'élément (21) à déplacer ou d'un élément (25) adjoint à celui-ci et ce, de manière à pouvoir glisser.

12. Dispositif selon l'une quelconque des revendications 1 à 11, caractérisé en ce que la pièce de réglage (15, 16) est conçue sous la forme d'un boulon fileté comportant un filetage extérieur (19) et peut être introduite ou est introduite dans un écrou fileté (20) qui est de son côté placé sur l'élément (21) à déplacer, la pièce de réglage (15, 16) étant prémunie dans une position réglée contre tout déplacement.

13. Dispositif selon la revendication 12, caractérisé en ce que, en tant que sécurité contre tout déplacement, un écrou cylindrique à encoches (17) comportant une plaque d'arrêt (18) est placé comme contre-écrou sur le filetage extérieur (19).

14. Dispositif selon l'une quelconque des revendications 1 à 13, caractérisé en ce que la tige (1, 2) est de forme cylindrique et présente sur sa face opposée à la tête à galet (9) un filetage intérieur (10), qui s'étend de manière centrée et axiale sur une longueur limitée (11), et dans lequel une vis à tête (12) peut être introduite par un alésage (13, 14) correspondant de la pièce de réglage (15, 16).

15. Dispositif selon l'une quelconque des revendications 1 à 14, caractérisé en ce que la tige (2) est conçue sous la forme d'un piston rendu étanche par rapport à la paroi (5) de l'alésage (4), l'espace cylindrique libre qui se trouve devant le piston étant relié par l'intermédiaire d'un conduit (6) à un accumulateur de pression (8) et le conduit (6) présentant un clapet anti-retour (7) qui empêche un refoulement dans l'accumulateur de pression (8).

Fig 1

Fig 2

Fig 3